Europäisches Patentamt

(19) European Patent Office

Office européen des brevets

(11) EP 1 132 359 B1

(12) **EUROPEAN PATENT SPECIFICATION**

(45) Date of publication and mention
of the grant of the patent:
**04.06.2003 Bulletin 2003/23**

(51) Int Cl.$^7$: **C04B 35/624**, C04B 35/111

(21) Application number: **00870036.1**

(22) Date of filing: **07.03.2000**

(54) **Sol-gel modified gel casting of ceramic powders**

Sol-Gel modifiziertes Gelgiessen von keramischen Pulvern

Procédé modifié de coulée de gel de poudres céramiques par voie sol-gel

(84) Designated Contracting States:
**AT BE CH CY DE DK ES FI FR GB GR IE IT LI LU
MC NL PT SE**
Designated Extension States:
**SI**

(43) Date of publication of application:
**12.09.2001 Bulletin 2001/37**

(73) Proprietor: **"VLAAMSE INSTELLING VOOR
TECHNOLOGISCH ONDERZOEK",
afgekort "V.I.T.O."**
**2400 Mol (BE)**

(72) Inventors:
 • **van de Leest, René**
 **2350 Vosselaar (BE)**
 • **Luyten, Jan**
 **3054 Vaalbeek (BE)**

(74) Representative: **Van Malderen, Joelle et al**
 **Office Van Malderen,**
 **Place Reine Fabiola 6/1**
 **1083 Bruxelles (BE)**

(56) References cited:
 • **BEGHI M ET AL: "FABRICATION OF LARGE SIZE
 NEAR NET SHAPE COMPONENTS OF SILICA
 GLASS" EUROGEL '91, pages 213-217,
 XP000921242**
 • **SAHA A ET AL: "MICROSTRUCTURE
 DEVELOPMENT IN HYBRID SOL-GEL
 PREPARED AL2O3-ZRO2 COMPOSITES"
 JOURNAL OF MATERIALS SCIENCE
 LETTERS,GB,CHAPMAN AND HALL LTD.
 LONDON, vol. 17, no. 15, 1 August 1998
 (1998-08-01), pages 1333-1336, XP000787333
 ISSN: 0261-8028**
 • **PATENT ABSTRACTS OF JAPAN vol. 015, no.
 425 (C-0879), 29 October 1991 (1991-10-29) & JP
 03 177352 A (AISERO KAGAKU KK), 1 August
 1991 (1991-08-01)**

## Description

## Field of the invention

The invention relates to a method for moulding ceramic powders.

## State of the art

Ceramics in complex shapes are regularly required in several areas of technology. Several methods for manufacturing such complex shapes are known in the art. Moulding ceramic powders under pressure to the desired shape, followed by a sintering step is one of them. The disadvantages of these classic technologies are well known and include long manufacturing time, low precision, form defects, expensive moulds, the lack of flexibility of the method and usually the need for aftertreatments (after sintering) that are necessary to obtain an acceptable end product.

U.S. Patents 4,894,194 and 5,028,362 describe a method for moulding ceramic powders using a water based alkaline suspension of ceramic powders, comprising a dispersant such as ammonium polyacrylate, an acrylate monomer and a free radical initiator compound. A catalyst is added just before the slurry is cast in a mould. Polymerisation by heating or catalysis results in a solid mass that can be dried, followed by removing the polymer by heating, and sintering the moulded ceramic powder. Important disadvantages of this technology are the use of poisonous compounds (acryl monomers) and the need for burning out the polymers.

Other polymerising agents can be used such as gelatine, proteins, cellulose ethers, polymerising under external influences such as pH change, temperature or (UV) light (Bergström et al, Key Engin. Mat., 132-136, 1997).

Another possibility is to coagulate an aqueous suspension of ceramic powder by Direct Coagulation Casting (DCC), using pH change or salt formation (Baader et al, Ceramic Processing Science and Technology, eds Hausner et al, Ceramic Transactions, vol. 51 (1994) 463, The American Ceramic Society; Graule et al, Scientific Forum, cfi/Ber.DKG, 71 (1994) 317.).

US patent 5,701,577 describes a method utilising liquid absorbing substances to solidify the ceramic powder suspension in a mould.

Sol-gel technology has been used to manufacture high quality optical components. Starting from a TEOS (Tetraethoxysilane) sol comprising colloidal $SiO_2$ particles, a moulded gel can be formed through hydrolysis/condensation reactions. Heat treatment transforms said gel into a quartz component, dimensioned about 3 times smaller than the mould dimensions (Beghi et al, Eurogel '91, eds Vilminot et al, Elsevier (1992)213; Hench, Ceramics International, 17 (1991)209; Shoup, Ceram. Bull., 70 (1991) 1505.).

Ceramic particles can be bound together via sol-gel bonds if the ceramic articles have hydroxyl groups at the surface (I.M. Thomas, SPIE proc., vol 895 (1988) 278).

Suspensions of ceramic particles in a sol-gel solution can be used to manufacture a thick ceramic layer by applying the suspension to a substrate surface and sintering the layer (U.S. Patent 5,585,136).

## Aims of the invention

A primary aim of the present invention is to provide a new and improved method for moulding ceramic powders to provide ceramic products in complex shapes. Said new method should solve the problems present in the prior art.

## General description of the invention

The present invention is a method for manufacturing a moulded ceramic artefact, comprising the following subsequent steps:

- prepare a dispersion of a ceramic powder in an acid aqueous solution,
- addition of a sufficient amount of a sol-gel component to said dispersion until said dispersion is coagulating,
- a gelling step, and
- a drying step.

Said ceramic powder is preferably selected from the group consisting of (1)oxides such as $Al_2O_3$, $ZrO_2$, $TiO_2$, $Ta_2O_5$, $CeO_2$..., (2) mixed oxides such as Y-doped $ZrO_2$, (3) oxidic compounds such as PZT, $BaTiO_3$, $LaMnO_3$..., (4) cermets such as Ni-$ZrO_2$. Said sol-gel component is preferably selected from the group consisting of alkoxides such as TEOS and chemically modified alkoxides such as acetylacetonate-modified aluminiumisopropylate.

In a specific embodiment of the present invention, the gelling step comprises raising of the pH, preferably by exposing the coagulated dispersion to ammonia vapour.

The drying step in the method according to the present invention comprises preferably the removal of molecular water by exposing the gelled coagulated dispersion to a temperature comprised between room temperature and 150 °C, removal of reaction water and hydrolysed groups by exposing the gelled coagulated dispersion to a temperature comprised between 150 °C and 450°C, and burnout of the remaining hydrocarbon compounds exposing the gelled coagulates dispersion to a temperature higher than 450 °C.

The method of the present invention can further comprise a sintering step, comprising exposing the dried gelled coagulated dispersion to a temperature comprised between 500°C and 2000°C for a time comprised between 15 and 180 minutes.

The method of the present invention can be further characterised in that the coagulated dispersion and optionally the gelled coagulated dispersion are prepared in a mould.

## Detailed description of the invention

A sol-gel solution of compounds such as alkoxides combined with ceramic particles is used in a new method for ceramic powder moulding. Hydrolysis of alkoxides leads to the replacement of an alkoxide group by a hydroxyl group:

$$-Me-OC_xH_y + H_2O \rightarrow -Me-OH + C_xH_yOH$$

The hydrolysed compound can be chemically coupled to a ceramic particle comprising hydroxyl groups at its surface:

$$-Me-OH + HO-Particle \rightarrow -Me-O-Particle + H_2O$$

Sol-gel compounds form three-dimensional networks through hydrolysis-condensation reactions and can be used to immobilise ceramic particles to a solid, green mass. Performing these reactions in a mould, followed by drying and sintering yields a ceramic product.

Hydrolysis of alkoxides is catalysed in acid media while condensation is inhibited. On the other hand, condensation is catalysed in alkaline solutions.

The new method of the invention combines sol-gel casting and ceramic gel casting. In a preferred embodiment of the present invention, metal alkoxides are used. These compounds hydrolyse in acid medium with the replacement of alkoxide groups by hydroxyl groups. In moderate alkaline medium, a condensation reaction between hydroxyl groups takes place to form water and an oxide bond. A gel is formed which is transformed into an oxide layer through thermal heating, light irradiation or plasma treatment.

The use of the metal alkoxides as in the present invention has the major advantage that no new components have to be introduced to obtain the gel. Indeed, the alkoxides can be transformed, after gelling, to the corresponding oxides, using only moderate temperatures ($< 200°C$) to remove the alkoxy groups. Further, the three-dimensional gel network is reinforced and inclusion of ceramic particles promoted since chemical bonds (oxide bonds) are formed between the ceramic particles and the sol-gel compounds, both resulting in oxide bonds between ceramic compounds.

Drying of the obtained gel in the desired form is performed using the known techniques for sol-gel drying (Van de Leest, R.E. et al.,Appl.Surf.Sci., 106 (1996) 412 and Keddy, J.L. et al., J.Amer.Ceram.Soc., 77 (1994) 1592). Usually, three stages are required:

> 1. Temperature (T°) between room temperature and 150°C: removal of molecular water
> 2. T° between 150 and 400°C: removal of reaction water and hydrolysed groups such as alcohol, acetic acid, acetaldehyde, ...
> 3. T° above 400°C: burnout of the remaining hydrocarbon compounds.

Gel casting needs to be performed with a high ceramic particle dispersion degree (preferably higher than 50 vol%) to limit shrinking effects. The particles have to be dispersed in an acid solution. To obtain such high dispersion, the solution needs to be sufficiently acidified, depending on the type of acid used. E.g. a high degree dispersion of $Al_2O_3$ is feasible in an $HNO_3$ or HCl solution, but not in $H_2SO_4$ or acetic acid. Dispersion agents can be added.

The present invention will be further clarified using non-limiting examples and figures.

Short description of the figures:

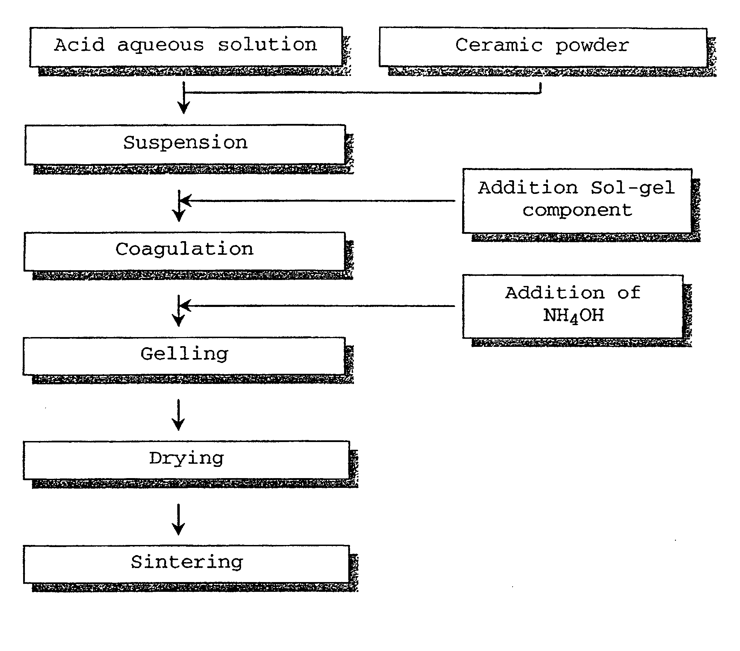

Figure 1 describes a flow chart of a method according to a preferred embodiment of the present invention.

Example 1:

This example describes how a ceramic product can be formed by casting a sol-gel dispersion into a mould. The dispersion degree of 50 vol% $Al_2O_3$ in 0.3N $HNO_3$ with 0.1N TEOS recedes to about 37.5 vol%. The addition of TEOS until a concentration of about 1N is reached results in a coagulation. In the case that the TEOS is not hydrolysed, coagulation can take a few hours, resulting in a green gel.

Exposure of the green gel to ammonia vapour raises alkalinity of the gel and provokes condensation reactions, leading to a stronger gel structure. This gel is mechanically workable and can easily be taken out of the mould.

Drying is performed by using the following temperature profile:

| Temperature (°C) | Duration (hours) |
|---|---|
| 150 | 2 |
| 450 | 2 |
| 700 | 2 |

The weight loss after drying is less than 1%.

The dried mass is further sintered at a temperature of 1575 °C during 15 minutes. The result is a heterogeneous ceramic mass comprising aluminiumoxide particles sizing between 0.5 and 3 μm and silicon diox-

ide particles measuring up to 10 μm. The density is about 89% of the theoretical density.

Example 2:

The same procedure is followed as in example 1, but now acetylacetonate modified aluminiumisopropylate is added up to a concentration of 0.1N instead of adding TEOS. Coagulation with aluminiumisopropoxide can be controlled through the incorporation of non hydrolysable groups such as acetylacetone groups.

The aluminiumoxide-aluminiumisopropoxide system results in a homogeneous ceramic mass comprising particles sizing up to about 5 μm and having a density of about 97% of the theoretical density.

**Claims**

1.   Method for manufacturing a moulded ceramic artefact, comprising the following subsequent steps:

   •   preparation of a dispersion of a ceramic powder in an acid aqueous solution,
   •   addition of a sufficient amount of a sol-gel component to said dispersion until said dispersion is coagulating,
   •   a gelling step, and
   •   a drying step.

2.   The method as in claim 1, **characterised in that** said ceramic powder is selected from the group consisting of oxides such as $Al_2O_3$, mixed oxides such as Y-doped $ZrO_2$, oxidic compounds such as $BaTiO_3$ and cermets such as $Ni-ZrO_2$.

3.   The method as in claim 1 or 2, **characterised in that** said sol-gel component is selected from the group consisting of alkoxides such as TEOS and chemically modified alkoxides such as acetylacetonate - modified aluminiumisopropylate.

4.   The method as in any of the claims 1 to 3, **characterised in that** the gelling step comprises raising of the pH.

5.   The method as in claim 4, **characterised in that** the raising of the pH comprises exposing the coagulated dispersion to ammonia vapour.

6.   The method as in any of the claims 1 to 5, **characterised in that** said drying step comprises removal of molecular water by exposing the gelled coagulated dispersion to a temperature comprised between room temperature and 150 °C, removal of reaction water and hydrolysed groups by exposing the gelled coagulated dispersion to a temperature comprised between 150 °C and 450°C, and burnout of the remaining hydrocarbon compounds exposing the gelled coagulates dispersion to a temperature higher than 450 °C.

7.   The method as in any of the claims 1 to 6, further comprising a sintering step, comprising exposing the dried gelled coagulated dispersion to a temperature comprised between 500°C and 2000 °C for a time comprised between 15 and 180 minutes.

8.   The method as in any of the claims 1 to 7, **characterised in that** the coagulated dispersion and optionally the gelled coagulated dispersion are prepared in a mould.

**Patentansprüche**

1.   Verfahren zur Herstellung eines geformten, keramischen Artefakts, das die nachfolgenden Schritte umfasst:

   •   die Herstellung einer Dispersion eines keramischen Pulvers in einer sauren wässrigen Lösung,

   •   die Zugabe einer ausreichend großen Menge einer Sol-Gel Komponente zu der besagten Dispersion bis die besagte Dispersion koaguliert,

   •   den Schritt einer Gelierung, und

   •   den Schritt einer Trocknung.

2.   Verfahren gemäss Anspruch 1, **dadurch gekennzeichnet, dass** das besagte keramische Pulver aus der Gruppe bestehend aus Oxiden wie $Al_2O_3$, Mischoxiden wie Y-dotiertem $ZrO_2$, oxidischen Verbindungen wie $BaTiO_3$ und Cermets wie $Ni-ZrO_2$ ausgewählt wird.

3.   Verfahren gemäss Anspruch 1 oder 2, **dadurch gekennzeichnet, dass** die besagte Sol-Gel Komponente aus der Gruppe bestehend aus Alkoxiden wie TEOS und aus chemisch veränderten Alkoxiden wie mit Acetylacetonat modifiziertem Aluminiumisopropylat ausgewählt wird.

4.   Verfahren gemäss irgendeinem der Ansprüche 1 bis 3, **dadurch gekennzeichnet, dass** der Gelierungsschritt das Erhöhen des pH-Wertes mit umfasst.

5.   Verfahren gemäss Anspruch 4, **dadurch gekennzeichnet, dass** das Erhöhen des pH-Wertes mit umfasst, dass die koagulierte Dispersion einem Ammoniakdampf ausgesetzt wird.

**6.** Verfahren gemäss irgendeinem der Ansprüche 1 bis 5, **dadurch gekennzeichnet, dass** der besagte Trocknungsschritt mit umfasst das Entfernen von molekularem Wasser, indem die gelierte koagulierte Dispersion einer Temperatur ausgesetzt wird, welche in einem Bereich zwischen der Raumtemperatur und 150°C liegt, das Entfernen von Reaktionswasser und von hydrolysierten Gruppen, indem die gelierte koagulierte Dispersion einer Temperatur ausgesetzt wird, welche in einem Bereich zwischen 150°C und 450°C liegt, und die Verbrennung der übrigen Kohlenwasserstoffverbindungen, indem die gelierte koagulierte Dispersion einer Temperatur ausgesetzt wird, welche höher als 450°C liegt.

**7.** Verfahren gemäss irgendeinem der Ansprüche 1 bis 6, welches ferner einen Sinterungsschritt umfasst, welcher vorsieht, dass die getrocknete gelierte koagulierte Dispersion einer Temperatur ausgesetzt wird, welche in dem Bereich zwischen 500°C und 2000°C liegt, dies während einer Zeitdauer, die in dem Bereich zwischen 15 und 180 Minuten liegt.

**8.** Verfahren gemäss irgendeinem der Ansprüche 1 bis 7, **dadurch gekennzeichnet, dass** die koagulierte Dispersion und wahlweise die gelierte koagulierte Dispersion in einer Form hergestellt werden.

**Revendications**

**1.** Procédé de fabrication d'un artefact céramique moulé, comprenant les étapes suivantes :

- préparation d'une dispersion d'une poudre céramique dans une solution aqueuse acide,
- addition d'une quantité suffisante d'un composant sol-gel à ladite dispersion jusqu'à ce que ladite dispersion se soit coagulée,
- une étape de gélification et
- une étape de séchage.

**2.** Procédé selon la revendication 1, **caractérisé en ce que** ladite poudre céramique est choisie parmi le groupe constitué des oxydes tels que $Al_2O_3$, des oxydes mixtes tels que $ZrO_2$ dopé au Y, des composés contenant des oxydes tels que $BaTiO_3$ et des cermets tels que $Ni\text{-}ZrO_2$.

**3.** Procédé selon la revendication 1 ou 2, **caractérisé en ce que** ledit composant sol-gel est choisi parmi le groupe constitué des alcoxydes, tels que TEOS, et des alcoxydes chimiquement modifiés, tels que l'acétylacétonate-isopropylate d'aluminium modifié.

**4.** Procédé selon l'une quelconque des revendications 1 à 3, **caractérisé en ce que** l'étape de gélification comprend l'augmentation du pH.

**5.** Procédé selon la revendication 4, **caractérisé en ce que** l'augmentation du pH comprend l'exposition de la dispersion coagulée à de la vapeur d'ammoniac.

**6.** Procédé selon l'une quelconque des revendications 1 à 5, **caractérisé en ce que** ladite étape de séchage comprend l'élimination de l'eau moléculaire en exposant la dispersion coagulée gélifiée à une température comprise entre la température ambiante et 150°C, l'élimination de l'eau de réaction et des groupes hydrolysés en exposant la dispersion coagulée gélifiée à une température comprise entre 150°C et 450°C, et la combustion des composés hydrocarbonés restants en exposant la dispersion coagulée gélifiée à une température supérieure à 450°C.

**7.** Procédé selon l'une quelconque des revendications 1 à 6, comprenant en outre une étape de frittage, comprenant l'exposition de la dispersion coagulée gélifiée séchée à une température comprise entre 500°C et 2000°C pendant une période de temps comprise entre 15 et 180 minutes.

**8.** Procédé selon l'une quelconque des revendications 1 à 7, **caractérisé en ce que** la dispersion coagulée et éventuellement la dispersion coagulée gélifiée sont préparées dans un moule.

```
┌─────────────────────────┐      ┌─────────────────────────┐
│ Acid aqueous solution   │      │   Ceramic powder        │
└─────────────────────────┘      └─────────────────────────┘
             │                                │
             ▼────────────────────────────────┘
┌─────────────────────────┐
│      Suspension         │
└─────────────────────────┘
             │                        ┌─────────────────────────┐
             │◄───────────────────────│  Addition Sol-gel       │
             ▼                        │     component           │
┌─────────────────────────┐          └─────────────────────────┘
│     Coagulation         │
└─────────────────────────┘          ┌─────────────────────────┐
             │◄───────────────────────│    Addition of          │
             ▼                        │      NH₄OH              │
┌─────────────────────────┐          └─────────────────────────┘
│       Gelling           │
└─────────────────────────┘
             │
             ▼
┌─────────────────────────┐
│       Drying            │
└─────────────────────────┘
             │
             ▼
┌─────────────────────────┐
│      Sintering          │
└─────────────────────────┘
```

6